# EUROPEAN PATENT APPLICATION

(11) **EP 1 003 258 A1**
(43) Date of publication of application: **24.05.2000**
(21) Application number: 99120026.2
(22) Date of filing: 18.10.1999
(51) Int. Cl.: H02B 1/20, H01R 13/187

(54) **An electrical conductor rail providing frontal sockets for the interconnection of several conductor rails**

(30) Priority: 19.10.1998 FR 9813100
(71) Applicant: FRAMATOME CONNECTORS INTERNATIONAL, 92400 Courbevoie (FR)
(72) Inventor: Chevassus-More, Alain, 25370 Touillon et Loutelet (FR); Pernot, Christian, 25300 Pontarlier (FR); Ritter, Friedhelm, 40699 Erkrath (DE)
(74) Representative: Beetz & Partner Patentanwälte

(57) **Abstract**

The present invention relates to an electrical conductor rail possessing contact pins arranged in a comb-like configuration and frontal sockets (5) for the purpose of interconnecting several conductor rails by means of a connection bar. The frontal sockets (5) comprise a first part (6) which is formed in a single continuous piece with the conductor rail and which is tubular in form with an approximately flat top surface. A second component part has the form of a top spring (8) and is fixed at its rear part to the first part, of which it surrounds the bottom and sides with its front portion, pressing down upon it tightly, and with its free ends (9) pressing the pin of the connection bar down against the top surface of the first part (6).

## Description

The present invention relates to an electrical conductor rail as described in the introduction to claim 1. Such conductor rails are notably used in electrical supply networks in which currents of the order of several amperes are carried at a voltage of several hundred volts. The safety systems to be included in such installations usually comprise a series of automatic safety devices which take the form of plug-in modules arranged on a connection board in an electrical junction box. In this context, it is often necessary to provide an electrical connection between a number of conductor rails placed in a surrounding frame. The conductor rails, mounted horizontally, are connected to one another via vertically mounted busbar. The conductor rails and the vertical busbar possess plugs at their connection points. Electrical connection of the plugs and therefore the rails is effected by means of electrical sockets.

Such connections between conductor rails, sockets and vertical busbar must function reliably over long periods of time and withstand high levels of current, while nevertheless being manufactured at low cost.

The connection sockets of types known hitherto have not always proved capable of meeting all the requirements imposed upon them, as regards contact resistance and long-term reliability in particular.

The present invention is intended to improve electrical conductor rails of the type described above in the introduction in such a manner that they offer a high level of long-term reliability and low contact resistance in addition to low manufacturing cost.

This goal is achieved by a conductor rail in accordance with the main claim. The sub-claims describe the characteristics of the preferred embodiments of the present invention.

The invention is described below in greater detail using a description of one embodiment in which reference is made to the drawings. The latter show the following:
Figure 1 is a frame with two electrical conductor rails providing sufficient free space for the fitting of vertical busbar.
Figure 2 is a connection bar used with the conductor rail as described in the present invention.
Figure 3 is a plan view of two conductor rails connected to one another by a busbar connector, and -
Figure 4 provides cross- and longitudinal section views of the electrical sockets provided on the conductor rail as described in the invention.

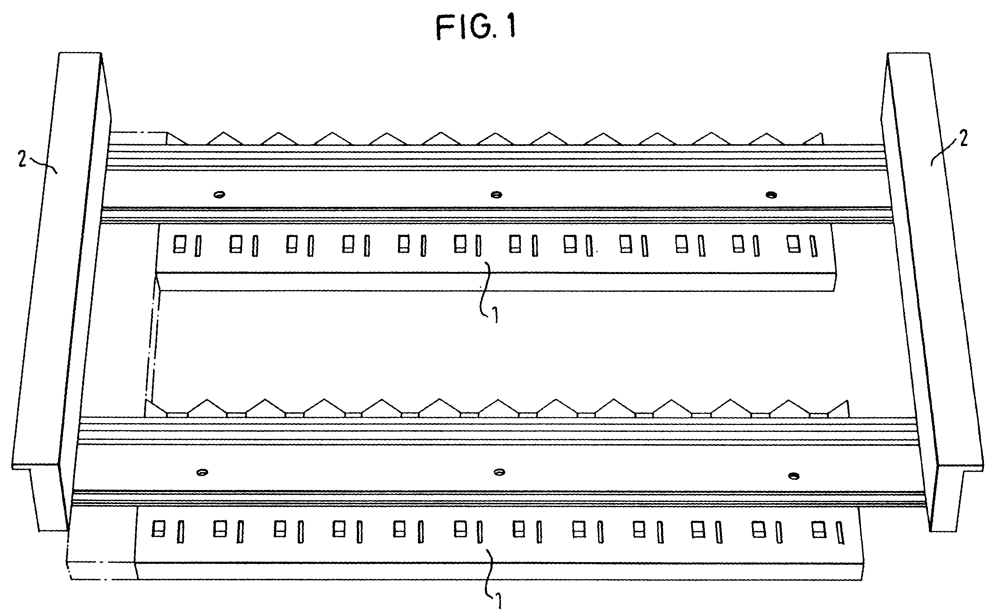

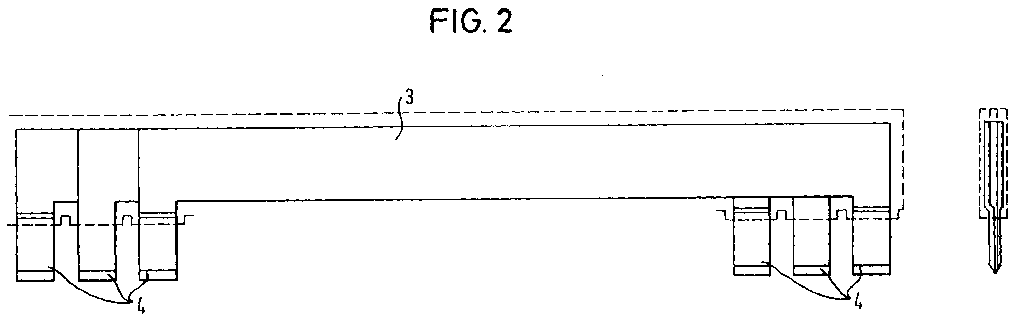

Figure 1 shows a frame 2 with two conductor rails 1. It is also possible to include several conductor rails. To the right and to the left of conductor rail 1 there is sufficient space to place a connection bar in order to provide an electrical connection between the conductor rails. The solution to the efficient use of the space available is provided by a connection bar 3 as shown in figure 2. This connection bar comprises, as does conductor rail 1, three metal sheets isolated electrically from each other and possessing a plug 4 at each end of the metal strip in such a manner that the plugs are placed side by side at the two ends of the connection bar and across its longitudinal axis.

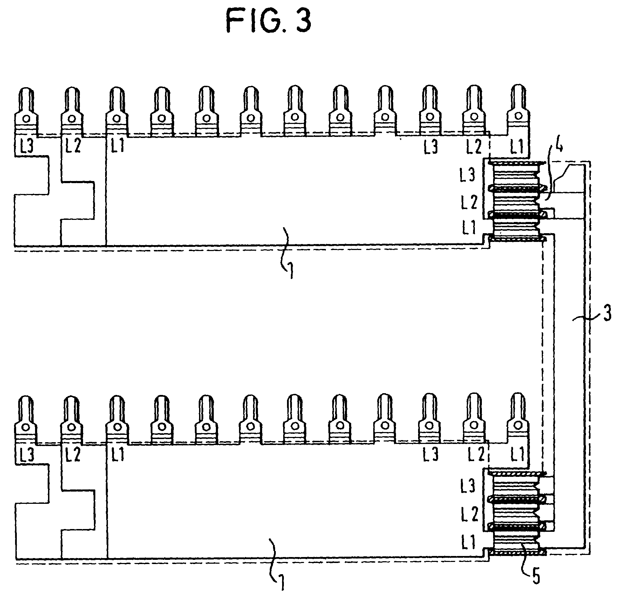

Figure 3 shows two conductor rails 1 connected one to the other by a connection bar 3. It can be seen in figure 3 that there are on the right-hand side of each conductor rail three frontal sockets 5, each placed parallel to the others, which are intended to receive the plugs 4.

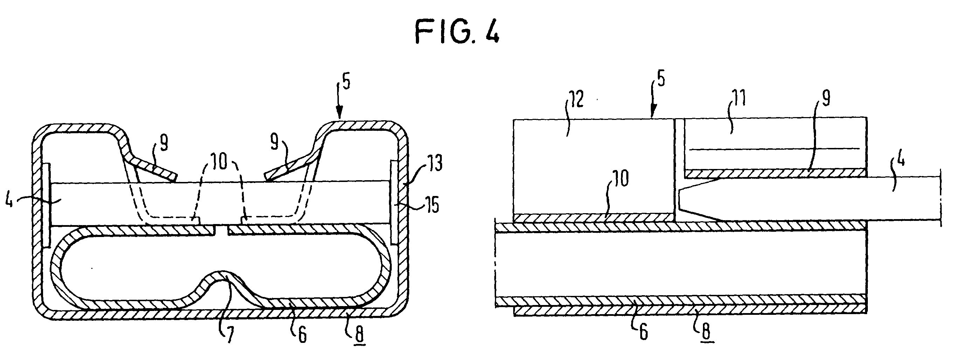

Figure 4 shows in more precise terms the composition of the frontal sockets in cross-section (left-hand view) and in longitudinal section (right-hand view).

The socket shown in figure 4 comprises two parts. The first part 6 is a piece of sheet metal forming a single continuous part with the conductor rail and bent to form a tube in such a manner that the longitudinal edges, seen in the direction of insertion, of the metal sheet almost meet at a point approximately in line with the central vertical longitudinal plane of the socket. The result is a product in the form of a tube whose upper surface is flat and whose sides possess an approximately semi-circular cross-sectional profile. The area at the bottom of this part is also approximately flat and parallel to the top surface of the "tube", with the exception of the ridge 7 rising inwards on the central vertical axis of the socket. This ridge may be replaced, in one variant of the invention, by tongues folded down to provide local strengthening of the socket. The insertion end of the socket may be advantageously arranged in a manner such as it projects slightly above the surrounding surface and is bevelled (on both sides or on one side only), in order to facilitate the insertion of the plug connection pin.

A top spring 8 is fitted around this first part of the socket, tightly surrounding the bottom and the sides of the first part and forming, around the top of the latter, pressure arms 9 and 10 which differ, seen in the direction of insertion, in their front and rear halves. In the front half 11, a pressure arm with a stepped profile is shaped in stepped form directly on each side of the top spring 8. The termination area connecting to the free end of this arm is curved in such a manner that it presses flat against the top surface of a male connection pin 4, applying a degree of pressure when the connection pin is introduced into the socket.

The stepped configuration of the pressure arm 10 in the rear area 12 of the top spring allows rigid, tensioned mounting of the top spring 8 on the first part 6 of the connection socket. To achieve this, the terminations of the pressure arm 10 press down on the top surface of the first tubular part.

Tongues are stamped out in the sides and extend in approximately a straight line from the top spring 8, are bent slightly inwards and their terminations are directed away from the entrance of the socket sleeve. These tongues provide a further electrical contact with the connection pin in a manner such that the pin is pressed into contact at all points in an optimum fashion with the socket. In order to reduce still further the contact resistance of this connection of plug and socket type, it is advantageous to cover the socket sleeves and the connection pins with a fine coating of silver or a highly conductive tin/lead alloy.

It may also be noted that a very significant saving in the space occupied has also been achieved due to the use of a connection pin which is very flat, and consequently of limited thickness, and which allows connection by introduction from the side in the same plane as the busbar conductors.

The present invention is defined in the appended claims and is not limited to the embodiment represented herein.

## Claims

1. A conductor rail (1) comprising connection pins arranged in a comb configuration and frontal sockets (5) for the purpose of interconnecting several such conductor rails (1) by means of a connection bar (3), and characterised by the fact that the frontal sockets (5) possess a first part (6) forming a single continuous part with the conductor rail (1) and which are, seen in the direction of insertion, tubular in form with an approximately flat top surface, with the edges of the sheet metal almost meeting at a point on the central longitudinal vertical plane of the socket on the top surface of the first component part, and a second component part which has the form of a top spring (8) which is fixed at its rear (12) to the first component part and which surrounds with its front half the bottom and sides of the first component part, pressing down tightly upon it, and with its free ends (9) pressing the pin of the connection bar (3) down against the top surface of the first component part (6).

2. A conductor rail as described in claim 1, in which the top surface of the top spring has a stepped profile, with those parts adjacent to the sides of the top spring (8) being at the same height in the front and rear halves.

3. A conductor rail as described in claims 1 and 2, in which several conductive metal strips each isolated electrically from the others by insulating sheet material, are overlaid one upon the other to form a conductor rail (1) and in which each conducting strip has a frontal socket (5), the sockets being arranged side by side.

4. A conductor rail as described in claims 1 to 3 inclusive, in which the first part (6) of the socket (5) has in the central longitudinal plane in the bottom area a longitudinal ridge (7) rising upwards, and in which the sides are approximately semi-circular in cross-section.

5. A conductor rail as described in any of the above claims, in which the second part has on its sides (13) in the front half at the level of the insertion area of the contact plug pin, a tongue (15) curved inward whose free termination is directed towards the rear and which presses down on the contact pin.

6. A conductor rail as described in any of the above claims, in which the frontal sockets (5) have been given a fine coating of silver or lead/tin alloy.
